# EUROPEAN PATENT APPLICATION

(11) **EP 3 839 168 A1**
(43) Date of publication of application: **23.06.2021**
(21) Application number: 19218045.3
(22) Date of filing: 19.12.2019
(51) Int. Cl.: E04F 13/08, F16B 25/00

(54) **FASTENER AND FAÇADE**

(71) Applicant: Hilti Aktiengesellschaft, 9494 Schaan (LI)
(72) Inventor: Plaschkes, Ran, 65375 Oestrich-Winkel (DE); Ayrle, Thomas, 86853 Langerringen (DE); Linsenbolz, Sebastian, 2624 Breitenau (AT)
(74) Representative: Hilti Aktiengesellschaft Corporate Intellectual Property

(57) **Abstract**

A façade comprises a façade panel (58), a hanger (37, 57) and a fastener (1, 21, 41) extending through the hanger into a blind hole (60) provided at the façade panel. The fastener comprises a shaft (2, 22) defining a fastening direction (3, 23) and has a front face (4, 24) facing in the fastening direction for penetrating the façade panel and a back end (5, 25) facing in a direction opposite to the fastening direction, and a head (6, 26) arranged at the back end and having a bearing surface (7, 27) facing in the fastening direction for bearing on the hanger. The front face has an outer edge (8, 28) at an outer circumference of the shaft and a recess (9, 29) falling short in the fastening direction with respect to the outer edge.

## Description

### Technical Field

The present invention relates to a fastener for fastening a hanger to a façade panel, and a facade.

### Background Art

In order to mount a façade comprising multiple façade panels to a wall, it is known to fasten a rail system to the wall, fasten several hangers to the façade panels and attach the hangers each to a rail of the rail system. For esthetical reasons, the hangers are fastened to a back side of each façade panel such that the hangers are invisible in the later finished facade. Fastening a hanger to a façade panel usually incurs at least some deformation of the façade panel which might be visible from a front side of the façade panel, particularly if thin panels are used. It is an object to provide a fastener and/or a façade incurring a low risk of visible deformation of a façade panel.

### Summary of Invention

According to a first aspect of the invention, a fastener for fastening a hanger to a façade panel comprises a shaft defining a fastening direction and having a front face facing in the fastening direction for penetrating the façade panel and a back end facing in a direction opposite to the fastening direction, and a head arranged at the back end and having a bearing surface facing in the fastening direction for bearing on the hanger, wherein the front face has an outer edge at an outer circumference of the shaft and a recess falling short in the fastening direction with respect to the outer edge. If the fastener is inserted in a blind hole provided in the façade panel, the recess may receive some material present in the blind hole, such as debris from a previous drilling action or the like, which would otherwise be pressed by the fastener against a bottom of the blind hole which could contribute to a deformation of the façade panel.

According to an embodiment, the recess extends, in a radial direction with respect to the fastening direction, to the outer edge. According to a preferred embodiment, the recess extends, in all radial directions with respect to the fastening direction, to the outer edge. This provides or increases a clearance between the whole front face and a bottom of the blind hole.

According to another embodiment, the shaft comprises a first thread at its outer circumference, wherein the first thread has a first major diameter and a minor diameter. The first thread contributes to a form-locking joint between the fastener and the façade panel. According to a preferred embodiment, the shaft comprises a second thread at its outer circumference, wherein the second thread has a second major diameter smaller than the first major diameter. The second thread helps keeping the fastener straight, i.e. perpendicular to a surface of the façade panel.

According to another preferred embodiment, the first thread and/or the second thread extends to the front face, in particular to the outer edge of the front face. According to another preferred embodiment, the first thread and/or the second thread has a thread lead-in extending over at most one convolution of the respective first or second thread. In an even more preferred embodiment, thread lead-in extends over at most 50%, particularly at most 35% of a convolution of the respective first or second thread. The threads thus make use of a great part of the length of the shaft, contributing to a high load carrying potential.

According to another preferred embodiment, the shaft comprises a constant-diameter section extending to the front face, or to the outer edge, and an increasing-diameter section extending to the back end, wherein, in the constant-diameter section, the minor diameter and/or the first major and/or the second major diameter diameter is constant along the fastening direction, and wherein, in the increasing-diameter section, the minor diameter and/or the first major diameter and/or the second major diameter increases towards the back end. This may reduce material stress and/or inhance material flow during a thread forming process when the fastener is manufactured.

According to another embodiment, the shaft comprises a collar for supporting the façade panel in a radial direction with respect to the fastening direction. This may reduce play between the fastener and the hanger and enhance accurate positioning the hanger on the façade panel. According to a preferred embodiment, the collar has a collar outside diameter which is greater than the first major diameter, preventing the first thread from cutting into the hanger. According to another preferred embodiment, the fastener has a receptacle for a driver at the back end and extending, along the fastening direction, to the collar. If the collar provides part of its volume for the receptacle, little material is needed for the head and/or the fastener as a whole. According to an even more preferred embodiment, the head has a head length in the fastening direction and the collar has a collar length in the fastening direction greater than the head length. This enables the head to have a little volume and weight.

According to another embodiment, the recess extends to the back end, enabling the recess to receive even more material present in the blind hole. According to a preferred embodiment, the recess opens in a direction opposite to the fastening direction. This provides for releasing any air pressure that may otherwise build during inserting the fastener in the blind hole and/or releasing any moisture that may be present in the blind hole.

According to another embodiment, the fastener is used in a façade comprising a façade panel and a hanger, wherein the façade panel has a blind hole and the fastener extends through the hanger into the blind hole, and wherein the hanger is engaged between the bearing surface of the head and the façade panel. According to a preferred embodiment, the façade comprises a rail fastened to a wall of a building, wherein the hanger engages the rail, thereby attaching, or securing the façade panel to the wall.

### Brief Description of Drawings

The invention will be described in more detail by way of example hereinafter with reference to the drawings. The described embodiments are only possible configurations in which the individual features may however be implemented independently of each other or may be omitted.

In the drawings:
Fig. 1 is a cross-sectional view of a fastener;
Fig. 2 is a side view of the fastener of Fig. 1;
Fig. 3 is a perspective view of the fastener of Fig. 1;
Fig. 4 is another perspective view of the fastener of Fig. 1;
Fig. 5 is a cross-sectional view of a fastener;
Fig. 6 is a perspective view of the fastener of Fig. 5;
Fig. 7 is a front view of the fastener of Fig. 5;
Fig. 8 is a cross-sectional view of a facade;
Fig. 9 is a perspective view of a drill and a façade panel;
Fig. 10 is a cross-sectional view of the façade panel of Fig. 9;
Fig. 11 is a perspective view of the façade panel of Fig. 9 with a set of hangers attached to it;
Fig. 12 is a cross-sectional view of the façade panel with of Fig. 11;
Fig. 13 is a side view of a semi-finished facade; and
Fig. 14 is a perspective view of a semi-finished facade.

### Description of Embodiments

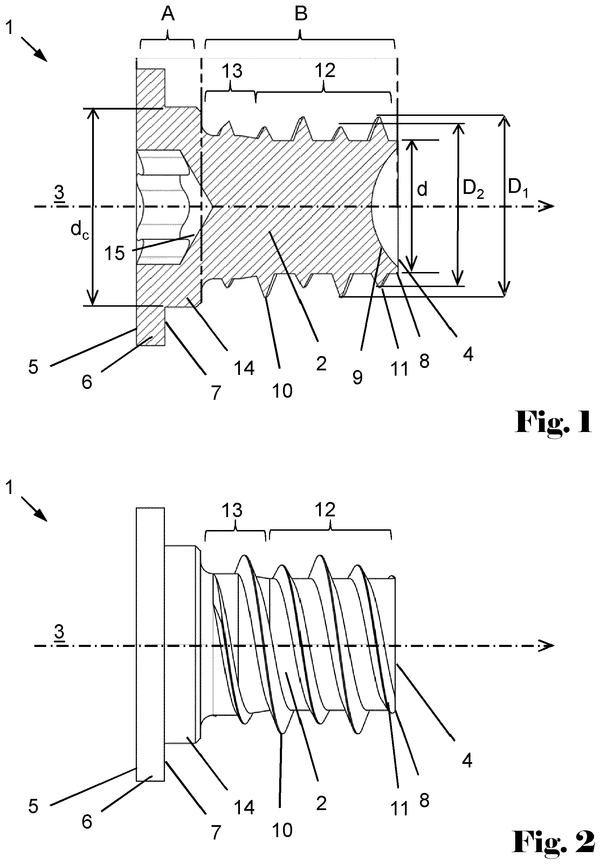

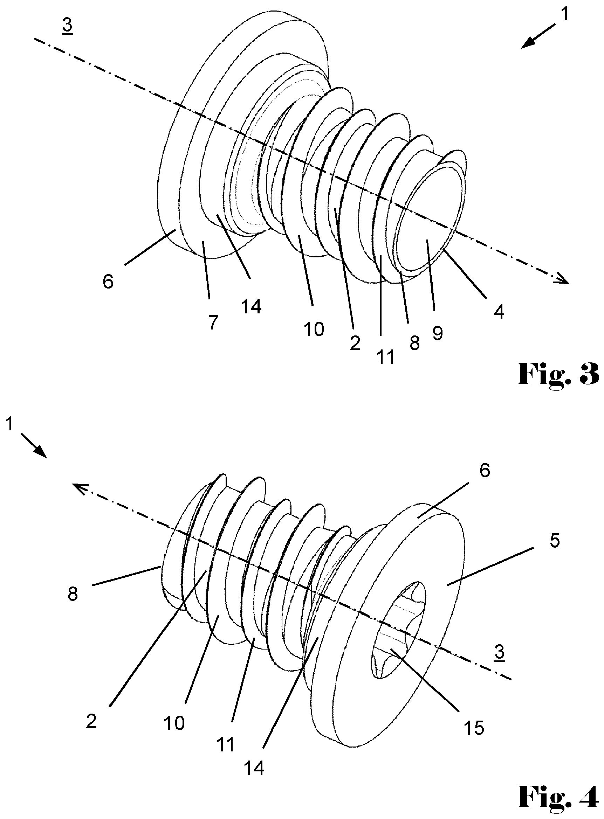

Figs. 1-4 show a fastener 1 for fastening a hanger (not shown) to a façade panel (not shown). The fastener 1 comprises a shaft 2 defining a fastening direction 3 and having a front face 4 facing in the fastening direction 3 for penetrating the façade panel and a back end 5 facing in a direction opposite to the fastening direction 3. The fastener further comprises a head 6 arranged at the back end 5 and having a bearing surface 7 facing in the fastening direction 3 for bearing on the hanger. The front face 4 has an outer edge 8 at an outer circumference of the shaft 2 and a recess 9 falling short in the fastening direction 3 with respect to the outer edge 8. In all radial directions with respect to the fastening direction 3, the recess 9 extends to the outer edge 8. At its outer circumference, the shaft 2 comprises a first thread 10 having a first major diameter D₁ and a minor diameter d, and a second thread 11 having a second major diameter D₂ which is smaller than the first major diameter D₁. Preferably, the first major diameter D₁ is 10% to 25% larger than the second major diameter D₂. Also, the first major diameter D₁ is preferably 15% to 35% larger than the minor diameter d. A thread lead of the first thread 10 and/or the second thread 11 is preferably between 2 mm and 4 mm. A thread pitch of the first and second threads 10, 11 together is preferably between 1 mm and 2 mm. Both the first thread 10 and the second thread 11 extend to the outer edge 8.

The shaft 2 comprises a constant-diameter section 12 extending to the outer edge 8 of the front face 4, and an increasing-diameter section 13 extending to the back end 5. In the constant-diameter section 12, the minor diameter d, the first major diameter D₁ and the second major diameter D₂ are constant along the fastening direction 3. In the increasing-diameter section 13, the minor diameter d increases towards the back end 5. This reduces material stress and inhances material flow during a thread forming process when the fastener is manufactured. The shaft 2 further comprises a collar 14 for supporting the façade panel in a radial direction with respect to the fastening direction 3. The collar 14 has a collar outside diameter d_{c} which is greater than the first major diameter D₁ and the second major diameter D₂. At the back end 5, the fastener 1 has a receptacle 15 that receives a driver for transferring a torque from the driver to the fastener 1. Along the fastening direction 3, the receptacle 15 extends up to and into the collar 14. Since the collar 14 provides part of its volume for the receptacle 15, little material is needed for the head 6 and the fastener 1 as a whole. The collar 14 has a collar length in the fastening direction 3 which is greater than a head length of the head 6, thus providing the head 6 to have a little volume and weight. The head 6 and the collar 14 together form a first section A having a first volume. The remainder of the shaft 2 forms a second section B having a second volume which is at least 15% greater than the first volume. Preferably, the second volume is at most 35% greater than the first volume.

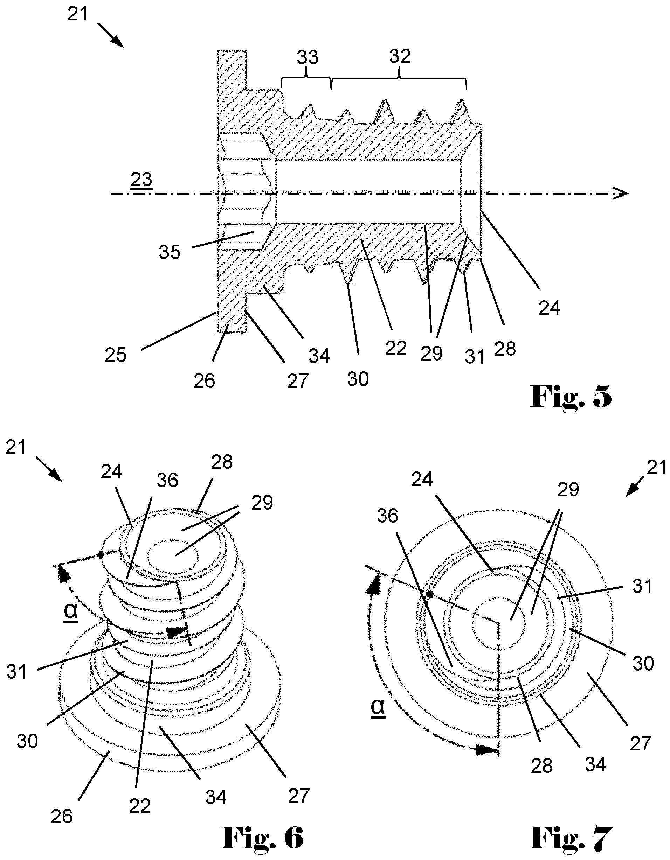

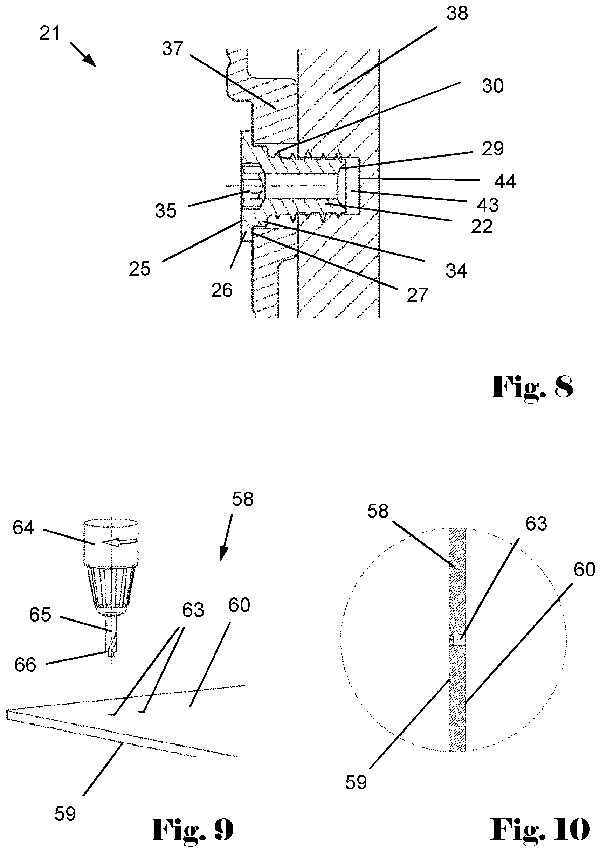

Figs. 5-8 show another embodiment of a fastener 21 for fastening a hanger 37 to a façade panel 38 (both shown in Fig. 8). The fastener 21 comprises a shaft 22 defining a fastening direction 23 and having a front face 24 and a back end 25, and a head 26 having a bearing surface 27. The front face 24 has an outer edge 28 at an outer circumference of the shaft 22 and a recess 29 falling short in the fastening direction 23 with respect to the outer edge 28 and extending to the outer edge 28. This provides a clearance between the front face 24 and a bottom 44 of a blind hole 43 provided in the façade panel 38, if the fastener 21 is inserted in the blind hole 43. Thus, the recess 29 is capable of receiving any debris from a previous drilling action, which would otherwise be pressed by the fastener 21 against the bottom 44 which could deform the façade panel 38. The shaft 22 comprises a first thread 30 and a second thread 31, both extending to the outer edge 28. The first thread 30 provides a form-locking joint between the fastener 21 and the façade panel 38, and has a thread lead-in 36 extending over an angle α of 120°, or a third of a convolution of the first thread 30. The first thread 30 thus makes use of a great part of the length of the shaft 22. The second thread 31 supports the fastener 21 in a straight orientation, i.e. perpendicular to a surface of the façade panel 38, during fastening the hanger 37 to the façade panel 38.

The shaft 22 further comprises a collar 34 for supporting the façade panel in a radial direction with respect to the fastening direction 23. The collar 34 provides for a reduced play between the fastener 21 and the hanger 37, thus enhancing accurate positioning the hanger 37 on the façade panel 38. Also, the collar 34 prevents the first thread 30 from cutting into the hanger 37. At the back end 25, the fastener 21 has a receptacle 35 for receiving a driver, such as a Torx, Philipps, Hex, SL, Allen, Square or similar driver. The recess 29 extends to the back end 25 and opens in a direction opposite to the fastening direction 23 into the receptacle 35. The recess therefore releases any air pressure that may otherwise build during inserting the fastener 21 in the blind hole 43 and releases any moisture that may be present in the blind hole 43. After fastening the hanger 37 to the façade panel 38, the hanger 37 is engaged between the bearing surface 27 of the head 26 and the façade panel 38.

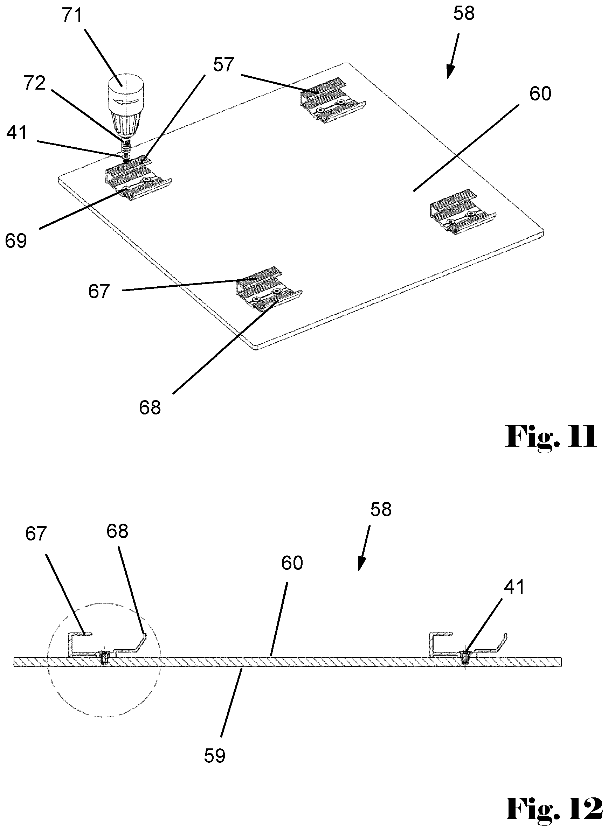

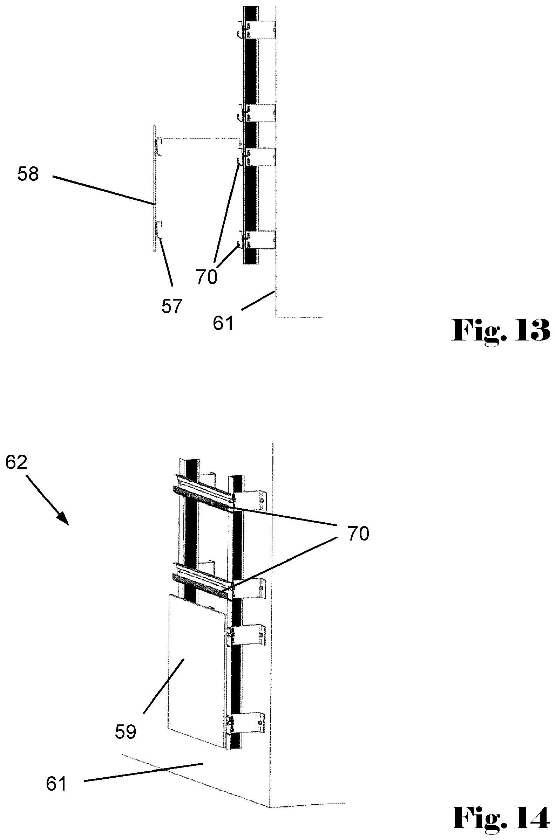

Figs. 9-14 demonstrate a method of attaching a façade panel 58 having a front side 59 and a back side 60 to a wall 61 (shown in Figs. 13-14) to build a façade 62. The façade panel 58 may have a thickness of only 8 mm and be made of high pressure laminate, fiber cement, a similar material or a combination thereof. In an early step (Figs. 9-10), the façade panel 58 is provided with blind holes 63 by drilling into the back side 60, using a drilling machine 64 or similar and a drill 65. A depth of each blind hole 63 is determined by a depth stop, such as a stop shoulder 66 on the drill 65. In a subsequent step (Figs. 11-12), which may be performed in a plant, a workshop, or on a jobsite, a set of hangers 57 each having a hook 67, a support 68, and one or several through-holes 69 is fastened to the façade panel 58 by inserting a fastener 41 through each of the through-holes 69 into one of the blind holes 63, using an electric screw gun 71 or similar and a preferably torque-controlled setting bit 72. In a further subsequent step (Figs. 13-14), the façade panel 58 is secured to the wall 61 by engaging the hangers 57 to a rail 70 previously fastened to the wall 61. Once the façade 62 is finished, the front side 59 of the façade panel 58 is visible from an outside view, whereas its back side 60, the hangers 57, and the fasteners 41 are invisible.

While the invention has been described with reference to its preferred embodiments, it will be understood by those skilled in the art that various changes may be made and equivalents may be substituted for elements thereof without departing from the true spirit and scope of the invention. All elements and features of the disclosed embodiments may be present individually or in any combination in all other embodiments, as long as not contradicting to each other. In addition, many modifications may be made to adapt a particular situation or material to the teaching of the invention without departing from its essential teachings.

## Claims

1. A fastener for fastening a hanger to a façade panel, comprising a shaft defining a fastening direction and having a front face facing in the fastening direction for penetrating the façade panel and a back end facing in a direction opposite to the fastening direction, and a head arranged at the back end and having a bearing surface facing in the fastening direction for bearing on the hanger, wherein the front face has an outer edge at an outer circumference of the shaft and a recess falling short in the fastening direction with respect to the outer edge.

2. The fastener according to claim 1, wherein, in a radial direction with respect to the fastening direction, the recess extends to the outer edge.

3. The fastener according to claim 2, wherein, in all radial directions with respect to the fastening direction, the recess extends to the outer edge.

4. The fastener according to any one of the preceding claims, wherein the shaft comprises a first thread at its outer circumference, wherein the first thread has a first major diameter and a minor diameter.

5. The fastener according to claim 4, wherein the shaft comprises a second thread at its outer circumference, wherein the second thread has a second major diameter smaller than the first major diameter.

6. The fastener according to any one of claims 4 to 5, wherein the first thread and/or the second thread extends to the front face, or to the outer edge.

7. The fastener according to any one of claims 4 to 6, wherein the first thread and/or the second thread has a thread lead-in extending over at most one convolution, in particular at most 50%, or 35% of a convolution, of the respective first or second thread.

8. The fastener according to any one of the preceding claims, wherein the shaft comprises a constant-diameter section extending to the front face, or to the outer edge, and an increasing-diameter section extending to the back end, wherein, in the constant-diameter section, the minor diameter and/or the first major diameter and/or the second major diameter is constant along the fastening direction, and wherein, in the increasing-diameter section, the minor diameter and/or the first major diameter and/or the second major diameter increases towards the back end.

9. The fastener according to any one of the preceding claims, wherein the shaft comprises a collar for supporting the façade panel in a radial direction with respect to the fastening direction.

10. The fastener according to claim 9, wherein the collar has a collar outside diameter which is greater than the first major diameter.

11. The fastener according to any one of claims 9 to 10, further having a receptacle for a driver at the back end and extending, along the fastening direction, to the collar.

12. The fastener according to any one of claims 9 to 11, wherein the head has a head length in the fastening direction and the collar has a collar length in the fastening direction greater than the head length.

13. The fastener according to any one of the preceding claims, wherein the recess extends to the back end and, in particular, opens in a direction opposite to the fastening direction.

14. A façade comprising a façade panel, a hanger and the fastener according to any one of the preceding claims, wherein the façade panel has a blind hole and the fastener extends through the hanger into the blind hole, and wherein the hanger is engaged between the bearing surface and the façade panel.

15. The facade, further comprising a rail fastened to a wall of a building, wherein the hanger engages the rail, thereby attaching, or securing the façade panel to the wall.
